# EUROPEAN PATENT SPECIFICATION

(11) **EP 3 778 744 B1**
(45) Date of publication and mention of the grant of the patent: **16.02.2022**
(21) Application number: 20196749.4
(22) Date of filing: 17.09.2020
(51) Int. Cl.: C08J 11/24

(54) **PROCESSES FOR RECYCLING POLYETHYLENE TEREPHTHALATE**
VERFAHREN ZUM RECYCLING VON POLYETHYLENTEREPHTHALAT
PROCÉDÉS DE RECYCLAGE DE POLYÉTHYLÈNE TÉRÉPHTALATE

(30) Priority: 03.03.2020 EP 20160561
(43) Date of publication of application: 17.02.2021
(73) Proprietor: UAB Neo Group, 95346 Dovilai Eldership (LT)
(72) Inventor: Zutautas, Petras, LT-95346 Dovilai eldership (LT); Radajevas, Ruslanas, LT-95346 Dovilai eldership (LT); Narmontas, Kestutis, LT-95346 Dovilai eldership (LT); Galican, Vitalijus, LT-95346 Dovilai eldership (LT); Burvys, Kestutis, LT-95346 Dovilai eldership (LT)
(74) Representative: CMS Cameron McKenna Nabarro Olswang LLP

(56) References cited:
- WO-A1-2018/007356
- GB-A- 1 254 209
- US-A- 5 635 584

## Description

### BACKGROUND

Polyethylene terephthalate (PET) is a commonly used thermoplastic polymer resin which has many commercial functions. PET is most frequently used in the production of packaging, including plastic bottles, and synthetic textiles.

PET production typically involves the esterification of ethylene glycol and terephthalic acid conducted at moderate pressure and high temperature. The stoichiometric equation for this reaction is:

*n* C₆H₄(CO₂H)₂ + *n* HOCH₂CH₂OH → [(CO)C₆H₄(CO₂CH₂CH₂O)]*n* + 2*n* H₂O

[(CO)C₆H₄(CO₂CH₂CH₂O)] represents a monomeric unit. A typical PET material can comprise hundreds of these monomers.

Known PET recycling processes typically involve depolymerising PET materials to yield the constituent monomers which are then used to prepare new PET. Hydrolysis or alcoholysis may be used to break PET down to its constituent monomers. However, these processes are energy intensive and require numerous steps to purify the resulting monomers for food contact grade PET resin production.

Given the environmental impact of waste plastics, there is a need to provide a safe, efficient, and environmentally friendly method for recycling post-consumer PET.

GB 1 254 209 A discloses a process which comprises mixing high molecular weight linear polyester resin with a reclaiming agent in an extrusion apparatus, heating and mixing the mixture to induce a degradation reaction, and extruding the degraded polyester from the extrusion apparatus.

WO 2018/007356 A1 discloses a method for the depolymerisation of a polyester load comprising opaque PET, said method including at least conditioning, depolymerisation and diol-separation steps, a step of separating the liquid-monomer rich effluent, and a subsequent discolouration step.

### SUMMARY

The invention is as defined in the claims.

In an aspect, the step of re-polymerising comprises mixing the purified liquefied PET material into a virgin PET liquid polycondensation stage comprising virgin liquid material, said virgin liquid material comprising terephthalic acid and ethylene glycol.

In an aspect, the blend of purified liquefied PET material and virgin liquid material comprises no more than 90% purified liquefied PET material by weight, such as between 10% and 30% purified liquefied PET material by weight.

In the invention, the purified liquefied PET material has an intrinsic viscosity of between 0.05 dL/g and 0.5 dL/g, optionally wherein the PET material has an intrinsic viscosity of 0.06 dL/g.

In the invention, the ethylene glycol suitable to partially depolymerise the post-consumer PET material is recovered ethylene glycol that has been recovered from a virgin PET production process. In an aspect, the recovered ethylene glycol is added to the post-consumer PET material at a temperature no lower than 180°C, optionally no lower than 200°C. In an aspect, before the post-consumer PET and recovered ethylene glycol are combined, the recovered ethylene glycol is analysed to determine the purity of said recovered ethylene glycol, wherein the volume of recovered ethylene glycol combined with the post-consumer PET is determined according to said purity.

In an aspect, the mixture of post-consumer PET and ethylene glycol is heated to between 180°C and 265°C, such as between 230°C and 250° C.

In an aspect, the mixture of post-consumer PET and ethylene glycol is heated at an absolute pressure of between 0.1 and 3 MPa, wherein upon heating the absolute pressure is greater than 0.1 MPa, optionally greater than 0.2 MPa.

In an aspect, the post-consumer PET material is in the form of flakes or pellets prior to liquefying.

In an aspect, upon heating of the mixture of post-consumer PET material and ethylene glycol, a fraction of the mixture vaporises, and said vaporised fraction comprises no more than 10% of the ethylene glycol present in the mixture. In one aspect the process additionally comprises removing said vaporised fraction via condensing means. In an aspect, the vaporised fraction further comprises water and contaminants having a boiling point below 300°C.

In an aspect, re-polymerisation of the purified liquefied PET comprises increasing the viscosity of the PET material such that a polymeric PET material is produced which is a solid at temperatures below 150°C at 0.1 MPa.

Also provided herein is a polymeric PET material comprising recycled PET oligomers obtainable by the processes disclosed herein.

### FIGURES

The present invention will be better understood from the following detailed description read in light of the accompanying drawings, wherein:
FIG. 1 is a schematic drawing of an exemplary system suitable for implementing a process for recycling post-consumer PET;
FIG. 2 is a schematic drawing of an exemplary system suitable for implementing a process for recycling post-consumer PET, wherein the process is integrated with a virgin PET production line;
FIG. 3 is a graph illustrating the gradual increase in post-consumer PET concentration over time in a solvolysis reactor in a process according to Example 1;
FIG. 4 is a graph illustrating the gradual increase in post-consumer PET concentration over time in a solvolysis reactor in a process according to Example 2.

### DETAILED DESCRIPTION

According to the present invention, a process for recycling post-consumer polyethylene terephthalate (PET) comprises:
combining a post-consumer PET material with an amount of ethylene glycol suitable to partially depolymerise the post-consumer PET material, wherein the ratio of PET to ethylene glycol is between 5:95 to 95:5 by weight;
heating the mixture to between 100°C and 300°C, wherein upon heating the post-consumer PET material liquefies;
purifying the liquefied PET material, wherein said liquefied PET material comprises partially depolymerised PET and ethylene glycol, and wherein said purification comprises removal of at least one contaminant, wherein a contaminant is any component other than the partially depolymerised PET and ethylene glycol;
re-polymerising the purified liquefied PET to produce a polymeric PET material comprising recycled PET oligomers.

In some aspects, the process is integrated with a virgin PET production line. The skilled person will appreciate that the term "virgin" is to be understood to mean material that is produced directly from a petrochemical feedstock and has not been processed or used before. A "virgin PET" material is one which is not post-consumer.

The term "post-consumer" will be understood to refer to any material that is waste or has been used in some fashion previously. A "post-consumer" PET material may be a recycled PET material, and also encompasses other waste PET materials such as excess PET materials or defective PET materials that are never used commercially.

The present invention discloses a process for recycling post-consumer PET material which comprises partial depolymerisation of the PET material to produce PET oligomers. The PET oligomers are then repolymerised to produce a PET polymer, i.e. a PET material comprising recycled PET oligomeric units.

In the present invention, the post-consumer PET is not depolymerised to its constituent monomers.

It will be understood that the term "PET oligomer" refers to any low-molecular weight complex of two or more PET monomeric units. In the invention, PET oligomers comprise no more than 100 repeating PET monomeric units, such as no more than 95, 90, 80, 70, 60, 50, 40, or 30 monomeric units. In an aspect, PET oligomers comprise no more than 20 repeating PET monomeric units, such as no more than 19, 18, 17, 16, 15, 14, 13, 12, 11, 10, 9, 8, 7, 6, 5, 4, 3, or 2 monomeric units. In a preferred aspect, the PET oligomers comprise no more than 20 repeating PET monomeric units.

The post-consumer PET material is depolymerised to PET oligomers by combining the post-consumer PET material with an amount of ethylene glycol suitable to partially depolymerise the post-consumer PET material and heating the mixture to between 100°C and 300°C, such that the post-consumer PET material liquefies. It will be understood that the ethylene glycol is already in liquid form when it is added to the post-consumer PET material.

In aspects, the post-consumer PET material is in the form of pellets. In other aspects, the post-consumer PET material is in the form of flakes. In other aspects, the post-consumer PET material is in the form of a mixture of pellets and flakes. It has been found that pelletised or flaked PET materials liquefy more readily and are of more homogeneous size and shape, which allows more efficient heating and liquefying of the PET material.

In aspects, a solvolysis reactor is continuously dosed with said post-consumer PET material. This increases the efficiency of the process by allowing continuous heating of the PET material and ethylene glycol mixture. In an aspect, the solvolysis reactor is also continuously dosed with ethylene glycol. In aspects, the volume of material within the solvolysis reactor is kept substantially constant. This also aids efficiency of the process because the temperature and pressure within the reactor can be kept substantially constant with minimal effort. Large changes in temperature, for example caused by large amounts of cold (around 22°C) post-consumer PET material being added, are thereby avoided. In an aspect, a solvolysis reactor is continuously dosed with post-consumer PET material and ethylene glycol at a predetermined rate. In an alternative aspect, a solvolysis reactor is continuously dosed with post-consumer PET material and ethylene glycol, wherein the volume of liquefied PET material extracted from the solvolysis reactor is measured and the solvolysis reactor is dosed with a quantity of post-consumer PET material and ethylene glycol corresponding to the lost volume of liquefied PET material.

In an aspect, the volume of post-consumer PET is gradually increased over time. In an aspect, there is no post-consumer PET present in the solvolysis reactor initially. The solvolysis reactor contains the required volume of ethylene glycol, to which the post-consumer PET is added in a predetermined, time-dependent manner, such that the initial zero volume is increased such that the desired ratio of post-consumer PET to ethylene glycol is achieved. It has been found that adding the post-consumer PET to the ethylene glycol in such a controlled fashion improves liquidation of the post-consumer PET and improves the rate at which the post-consumer PET is partially depolymerised to PET oligomers.

The ratio of post-consumer PET material to ethylene glycol is between 5:95 and 95:5 by weight. Optionally, the ratio of post-consumer PET material to ethylene glycol is between 80:20 and 10:90. In an aspect, the ratio of post-consumer PET material to ethylene glycol is 80:20, 70:30, 60:40, 50:50, 40:60, 30:70, 20:80, or 10:90 by weight. In an aspect, the ratio of post-consumer PET material to ethylene glycol is 70:30 (all ratios by weight).

The mixture is heated such that the post-consumer PET material completely liquefies. The PET material is liquefied when no solid PET material is present.

In aspects, the mixture is continuously stirred to ensure that the mixture is homogenous and to aid PET liquefication.

The mixture of post-consumer PET and ethylene glycol is heated to between 100°C and 300°C, such as 290°C, 280°C, 270°C, 260°C, 250°C, 240°C, 230°C, 220°C, 210°C, 200°C, 190°C, 180°C, 170°C, 160°C, 150°C, 140°C, 130°C, 120°C, or 110°C. In an aspect, the mixture is heated to between 180°C and 265°C. In an aspect, the mixture is heated to between 230°C and 250° C. In an aspect, the mixture is heated to between 240°C and 260°C. In an aspect, the mixture is heated to between 195°C and 225°C. In an aspect, the mixture is heated to no more than 275°C, optionally no more than 270°C. In an aspect, the mixture is heated to between 230°C and 270°C.

In aspects, the temperature to which the mixture is heated is dependent on the type of post-consumer PET material that is present in the mixture. For example, post-consumer PET materials derived from hard plastic bottles and hard plastic packaging may require heating to much higher temperatures than post-consumer PET materials derived from plastic films or textiles.

In an aspect, the mixture is heated in a sealed solvolysis reactor such that upon heating the absolute pressure within the reactor increases. In an aspect, the initial absolute pressure within the reactor (before heating) is between 0.1 and 3 MPa. In an aspect, after the mixture is heated the absolute pressure within the reactor is greater than 0.1 MPa, and preferably greater than 0.2 MPa. In an aspect, the absolute pressure within the reactor increases by at least 0.1 MPa when the mixture is heated, such as by at least 0.2 MPa, 0.3 MPa, 0.4 MPa, or 0.5 MPa. It has been found that the rate of depolymerisation of post-consumer PET is greatly improved when the depolymerisation is conducted at elevated pressures.

In an aspect, the ethylene glycol is recovered ethylene glycol which has been recovered from a virgin PET production process. In an aspect, at least 50% of the ethylene glycol is recovered ethylene glycol. In aspects, the recovered ethylene glycol comprises water and other contaminants derived from the virgin PET production process, wherein a contaminant is any compound that is not post-consumer PET or ethylene glycol. In an aspect, the recovered ethylene glycol is added to the post-consumer PET material at a temperature no lower than 200°C. In an aspect, the recovered ethylene glycol is added to the post-consumer PET material at a temperature no lower than 180°C. In an aspect, the recovered ethylene glycol is added to the post-consumer PET material at a temperature no lower than 160°C. In an aspect, the recovered ethylene glycol is not heated separately before addition to the post-consumer PET material but carries residual heat from the virgin PET production process from which it was recovered, wherein the residual heat is at least greater than 30°C. In an aspect, said residual heat is no lower than 180°C. In an aspect, said residual heat is no lower than 160°C. It has been found that the residual heat of recovered ethylene glycol can improve the efficiency of the process described herein by dramatically reducing the amount of energy needed to heat the mixture.

In an aspect, the purity of the recovered ethylene glycol is determined before the recovered ethylene glycol is combined with the post-consumer PET material. The recovered ethylene glycol can be added to the mixture of PET and ethylene glycol in a continuous or non-continuous stream. Samples can be taken from said stream which are tested to determine the purity of the recovered ethylene glycol. The purity of the recovered ethylene glycol can be determined by any conventional method, such as gas chromatography and/or potentiometric titration. In an aspect, the purity of the recovered ethylene glycol is determined periodically, for example at predetermined intervals. In an aspect, the purity of the recovered ethylene glycol is determined every 30 minutes, every 1 hour, every 2 hours, every 5 hours, every 12 hours, or every 24 hours. In an aspect, the purity is determined no more than one every 24 hours.

The volume of recovered ethylene glycol which is to be combined with the post-consumer PET is then determined according to the purity. In an aspect, the amount of recovered ethylene glycol combined with the post-consumer PET is adjusted depending on the purity of said recovered ethylene glycol, to ensure that the desired ratio of post-consumer PET to ethylene glycol is achieved. For example, if the purity of the recovered ethylene glycol is 90%, and the desired ratio of post-consumer PET to ethylene glycol is 70:30 by weight, 70 kg of post-consumer PET would require 33.3 kg recovered ethylene glycol to ensure that the ratio of PET:ethylene glycol is 70:30 by weight.

In an aspect, a fraction of the mixture vaporises when the mixture is heated. It will be understood that vaporisation is the phase transition from liquid to vapor. The vaporised fraction comprises any components of the mixture having a boiling point below the temperature to which the mixture is heated, for example any components having a boiling point below 300°C, 290°C, 280°C, 270°C, 260°C, 250°C, 240°C, 230°C, 220°C, 210°C, 200°C, 150°C, or 100°C. In an aspect, the vaporised fraction includes any components having a boiling point below 200°C. In an aspect, the vaporised fraction includes any components having a boiling point below 195°C or below 190°C. In an aspect, the vaporised fraction includes any components having a boiling point below 150°C or below 100°C.

In an aspect, an amount of the ethylene glycol present in the mixture vaporises upon heating. The vaporised fraction suitably comprises no more than 90% of the ethylene glycol present in the mixture. In an aspect, the vaporised fraction comprises no more than 80% of the ethylene glycol present in the mixture, such as no more than 70%, 60%, 50%, 40%, 30%, 20%, or 10% of the ethylene glycol present in the mixture. In an aspect, the vaporised fraction comprises no more than 20% of the ethylene glycol present in the mixture. In an aspect, the vaporised fraction comprises no more than 10% of the ethylene glycol present in the mixture.

In an aspect, the vaporised fraction also comprises water vapour. In an aspect, the vaporised fraction also comprises other contaminants having a boiling point below 300°C, wherein a contaminant is any compound that is not post-consumer PET or ethylene glycol. In an aspect, the vaporised fraction comprises contaminants having a boiling point below 250°C, such as below 200°C or below 150°C.

In aspects where the ethylene glycol is recovered ethylene glycol or is a mixture of non-recovered and recovered ethylene glycol, the vaporised fraction comprises water and optionally further comprises contaminants derived from the virgin PET production process.

In an aspect, the vaporised fraction is removed from the solvolysis reactor by condensing means. In an aspect, the ethylene glycol present in the vaporised fraction is separated and recovered and is optionally re-introduced to the solvolysis reactor. In an aspect, the vaporised fraction is removed from the solvolysis reactor by any suitable means.

It will be appreciated that said vaporising causes an increase in pressure within the solvolysis reactor. As disclosed above, in aspects the absolute pressure within the reactor increases by at least 0.1 MPa when the mixture is heated and a fraction is vaporised, such as by at least 0.2 MPa, 0.3 MPa, 0.4 MPa, or 0.5 MPa.

In an aspect, the mixture further comprises a catalyst. A catalyst increases the rate of depolymerisation and optionally increases the efficiency of the process by reducing the temperature and pressure at which the depolymerisation reaction must be carried out.

In aspects, the mixture comprises one or more catalysts retained in the post-consumer PET material, optionally wherein the one or more catalysts are antimony-based. In a further aspect, no additional catalyst is added to the mixture. Antimony-based compounds are commonly used as catalysts in virgin PET production processes and such compounds are found in the resulting PET materials, including plastic bottles. It is very difficult to remove catalysts from a mixture, and thus catalysts are retained within the PET polymer where they can easily leach from the material. It is therefore desirable to avoid having an excessive amount of these compounds in the final PET material, for example because antimony-based catalysts pose health risks when ingested (for example, after leaching into water held in a PET plastic water bottle). It has been found that antimony-based catalysts that are retained within post-consumer PET materials can act as a catalyst for the depolymerisation of said post-consumer PET materials with no negative impact on the rate on depolymerisation. This is both more efficient and safer, since no additional catalysts are used in the process and there is no need for difficult and inefficient catalyst removal steps.

Following heating, the liquefied PET material comprising partially depolymerised PET and ethylene glycol is purified. The partially depolymerised PET comprises PET oligomers. In an aspect, this purification step is carried out in a purification unit, optionally wherein the liquefied PET material is transferred from the solvolysis reactor to the purification unit at a continuous rate.

Purification of the liquefied PET material comprises removal of at least one contaminant, wherein a contaminant is any component other than the partially depolymerised PET and ethylene glycol. In an aspect, purification comprises removal of at least two contaminants or at least three contaminants. In an aspect, the contaminants are solid contaminants.

In one aspect, purification is performed at 100°C - 280°C, such as 100°C - 270°C, 100°C - 260°C, 100°C - 250°C, 100°C - 240°C, 100°C - 230°C, 100°C - 220°C, 100°C - 210°C, 100°C - 200°C, 100°C - 190°C, 100°C - 180°C, 100°C - 170°C, 100°C - 160°C, 100°C - 150°C, 100°C - 140°C, 100°C - 130°C, 100°C - 120°C or 100°C - 110°C, or such as 110°C - 280°C, 120°C - 280°C, 130°C - 280°C, 140°C - 280°C, 150°C - 280°C, 160°C - 280°C, 170°C - 280°C, 180°C - 280°C, 190°C - 280°C, 200°C - 280°C, 210°C - 280°C, 220°C - 280°C, 230°C - 280°C, 240°C - 280°C, 250°C - 280°C, 260°C - 280°C, or 270°C - 280°C.

In one aspect, purification is preferably performed at 180°C - 240°C, such as 180°C - 230°C, 180°C - 220°C, 180°C - 210°C, or 180°C - 200°C, or 180°C - 190°C, or such as 190°C - 240°C, 200°C - 240°C, 210°C - 240°C, 220°C - 240°C or 230°C - 240°C. Preferably, purification is performed at 190°C - 230°C, such as 200°C - 220°C. Purification may be performed at, for example, 180°C, 185°C, 190°C, 195°C, 200°C, 205°C, 210°C, 215°C, 220°C, 225°C, 230°C, 235°C, or 240°C.

Most preferably, purification is performed at 160°C - 200°C, such as 170°C - 190°C, such as 180°C - 185°C.

In one aspect, purification is performed at 0.1MPa - 2.0MPa absolute pressure, such as 0.3MPa - 2.0MPa absolute pressure, 0.5MPa - 2.0MPa absolute pressure, 0.7MPa - 2.0MPa absolute pressure, 0.9MPa - 2.0MPa absolute pressure, 1.1MPa - 2.0MPa absolute pressure, 1.3MPa - 2.0MPa absolute pressure, 1.5MPa - 2.0MPa absolute pressure, 1.7MPa - 2.0MPa absolute pressure or 1.9MPa - 1.0MPa absolute pressure, or such as 0.1MPa - 1.8MPa absolute pressure, 0.1MPa - 1.6MPa absolute pressure, 0.1MPa - 1.4MPa absolute pressure, 0.1MPa - 1.2MPa absolute pressure, 0.1MPa - 1.0MPa absolute pressure, 0.1MPa - 0.8MPa absolute pressure, 0.1MPa - 0.6MPa absolute pressure, 0.1MPa - 0.4MPa absolute pressure, or 0.1MPa - 0.2MPa absolute pressure.

In one aspect, purification is preferably performed at 0.1MPa - 1.0MPa absolute pressure, such as 0.3MPa - 1.0MPa absolute pressure, 0.5MPa - 1.0MPa absolute pressure, 0.7MPa - 1.0MPa absolute pressure or 0.9MPa - 1.0MPa absolute pressure, or such as 0.1MPa - 0.8MPa absolute pressure, 0.1MPa - 0.6MPa absolute pressure, 0.1MPa - 0.4MPa absolute pressure, or 0.1MPa - 0.2MPa absolute pressure. Preferably, purification is performed at 0.2MPa - 0.9MPa absolute pressure, such as 0.3MPa - 0.8MPa absolute pressure, such as 0.4MPa - 0.7MPa absolute pressure, such as 0.5MPa - 0.6MPa absolute pressure. Purification may be performed at 0.1, 0.2, 0.3, 0.4, 0.5, 0.6, 0.7, 0.8 or 0.9MPa absolute pressure.

Most preferably, purification is performed at 0.1MPa - 0.6 MPa, such as 0.2MPa - 0.5MPa absolute pressure.

Any of the purification ranges and purification temperatures may be used together and all combinations are taught as individualised herein. One preferred set of temperature and pressure parameters is 180°C - 240°C and 0.1MPa - 1.0MPa absolute pressure. In one aspect, purification is performed at 180°C - 240°C and 0.1MPa - 0.8MPa absolute pressure, 180°C - 240°C and 0.1MPa - 0.7MPa absolute pressure, 180°C - 240°C and 0.1MPa - 0.6MPa absolute pressure or 180°C - 240°C and 0.1MPa - 0.5MPa absolute pressure. In one aspect purification is performed at 180°C - 230°C and 0.1MPa - 1.0MPa absolute pressure, 180°C - 220°C and 0.1MPa - 1.0MPa absolute pressure, 180°C - 210°C and 0.1MPa - 1.0MPa absolute pressure, 180°C - 200°C and 0.1MPa - 1.0MPa absolute pressure, 180°C - 190°C and 0.1MPa - 1.0MPa absolute pressure or 180°C - 185°C and 0.1MPa - 1.0MPa absolute pressure. A further preferred combination of parameters is 160°C - 200°C and 0.1MPa - 0.6MPa absolute pressure. A further preferred combination of parameters is 180°C - 185°C and 0.2MPa - 0.5MPa absolute pressure.

In aspects, the purified liquefied PET material is at least 90% pure, wherein purity is the % of the volume of the material that is either partially depolymerised PET material or ethylene glycol. In an aspect, no more than 10% of the purified liquefied PET material is contaminants. In an aspect, the purified liquefied PET material is at least 95% pure, such as at least 96%, 97%, 98%, or 99% pure. In an aspect, the purified liquefied PET material is at least 99% pure. In an aspect, the purified liquefied PET material is at least 99.5% pure. In an aspect, the purified liquefied PET material comprises no contaminants.

In an aspect, purification comprises removal of at least one contaminant selected from the group: non-PET polymers, paperboard, dissolved dyes. Purification can be achieved by any known method, such as physical pre-treatment by heating, solid centrifugal sedimentation, field assisted separation, depth filtering, or filtrate decolourisation with adsorption. In an aspect, purification comprises at least one of: physical pre-treatment by heating; solid centrifugal sedimentation; field assisted separation; depth filtering; filtrate decolourisation with adsorption, optionally with gravity filtration.

In the invention, the purified liquefied PET material has an intrinsic viscosity of between 0.05 dL/g and 0.5 dL/g. In an aspect, the purified liquefied PET material has an intrinsic viscosity of 0.06 dL/g. In other aspects, the purified liquefied PET material has an intrinsic velocity of between 0.06 dL/g and 0.1 dL/g, 0.06 dL/g and 0.25 dL/g, or 0.06 dL/g and 0.4 dL/g.

In an aspect, the partially depolymerised PET has an intrinsic viscosity of between 0.1 and 0.2 dL/g.

The purified liquefied PET is repolymerised to produce a polymeric PET material comprising recycled PET oligomers. In an aspect, repolymerisation comprises increasing the viscosity of the PET material such that a polymeric PET material is produced which is solid at temperatures below 150°C at 0.1 MPa.

In an aspect, the polymeric PET material comprising recycled PET oligomers has an intrinsic viscosity of between 0.4 and 0.7 dL/g, between 0.6 and 0.7 dL/g, between 0.7 and 1.0 dL/g, between 0.7 and 0.8 dL/g, between 0.8 and 0.9 dL/g, or between 1.0 and 2.0 dL/g. In an aspect, the polymeric PET material comprising recycled PET oligomers has an intrinsic viscosity of between 0.5 and 1.5 dL/g.

In an aspect, the polymeric PET material produced by repolymerisation of the purified liquified PET consists of recycled PET oligomers. In an aspect, the polymeric PET material produced by repolymerisation of the purified liquified PET consists essentially of recycled PET oligomers.

In an aspect, the purified liquefied PET material is repolymerised in an esterification unit. In an aspect, the purified liquefied PET material comprises partially depolymerised PET and ethylene glycol in a ratio of between 5:95 by weight and 95:5 by weight. In an aspect, the purified liquefied PET material comprises partially depolymerised PET and ethylene glycol in a ratio of between 80:20 by weight and 60:40 by weight. In an aspect, the purified liquefied PET material comprises partially depolymerised PET and ethylene glycol in a ratio of 70:30 by weight. In an aspect, the purified liquefied PET consists essentially of partially depolymerised PET and ethylene glycol, and optionally comprises one or more antimony-based catalysts retained within the purified liquefied PET.

In an aspect, the step of re-polymerising comprises mixing the purified liquefied PET material into a virgin PET liquid polycondensation stage comprising a virgin liquid material, said virgin liquid material comprising terephthalic acid and ethylene glycol. In a virgin PET polycondensation stage, the terephthalic acid and ethylene glycol are esterified to produce a polymeric PET material. In aspects of the present invention, the terephthalic acid and ethylene glycol are esterified with recycled PET oligomers to produce a polymeric PET material.

The purified liquefied PET is transferred to a virgin PET liquid polycondensation stage in a virgin PET production plant. The purified liquefied PET material is mixed with the virgin liquid material such that the polymeric PET material produced by repolymerisation comprises both virgin PET monomers and recycled PET oligomers. In an aspect, the virgin PET monomers and recycled PET oligomers are homogenously distributed in the polymeric PET material produced by repolymerisation.

Mixing the purified liquefied PET material with virgin liquid material improves the rate of repolymerisation of the partially depolymerised PET.

In an aspect, the blend of purified liquefied PET material and virgin liquid material comprises no more than 90% purified liquefied PET material by weight, such as no more than 80%, 70%, or 60% by weight. In an aspect, the blend of purified liquefied PET material and virgin liquid material comprises no more than 50% purified liquefied PET material by weight, such as no more than 40%, 30%, 20%, or 10% by weight. In an aspect, the blend of purified liquefied PET material and virgin liquid material comprises between 10% and 90% purified liquefied PET material by weight. In an aspect, the blend of purified liquefied PET material and virgin liquid material comprises between 10% and 50% purified liquefied PET material by weight. In an aspect, the blend of purified liquefied PET material and virgin liquid material comprises between 10% and 30% purified liquefied PET material by weight.

In an aspect, the ratio of recycled PET oligomers and virgin PET monomers in the polymeric PET material produced by repolymerisation corresponds to the ratio of blended purified liquefied PET material and virgin liquid material in the polycondensation stage.

The term "virgin PET monomers" will be understood to refer to any monomeric units within a polymeric PET material that are derived from a petrochemical feedstock. The term "recycled PET oligomers" will be understood to refer to any oligomeric units within a polymeric PET material that are derived from a post-consumer PET material.

In aspects, the virgin liquid material comprises terephthalic acid and ethylene glycol. In aspects, the virgin liquid material consists essentially of terephthalic acid and ethylene glycol. In aspects, the virgin liquid material consists of terephthalic acid and ethylene glycol.

In aspects where recovered ethylene glycol is used in the depolymerisation stage, the recovered ethylene glycol is preferably derived from the same virgin PET production process to which the purified liquefied PET material is mixed. In this manner, the ethylene glycol is completely recycled, and the efficiency of the process is vastly improved.

In an aspect, the polymeric PET material comprising recycled PET oligomers, and optionally also comprising virgin PET monomers, is cooled to room temperature and solidified. In an aspect, the polymeric PET material comprising recycled PET oligomers, and optionally also comprising virgin PET monomers, is liquid and transparent at temperatures above 150°C.

The present disclosure also provides a polymeric PET material comprising PET oligomers obtainable by the processes disclosed herein. The present disclosure also provides a polymeric PET material comprising PET oligomers obtained by the processes disclosed herein.

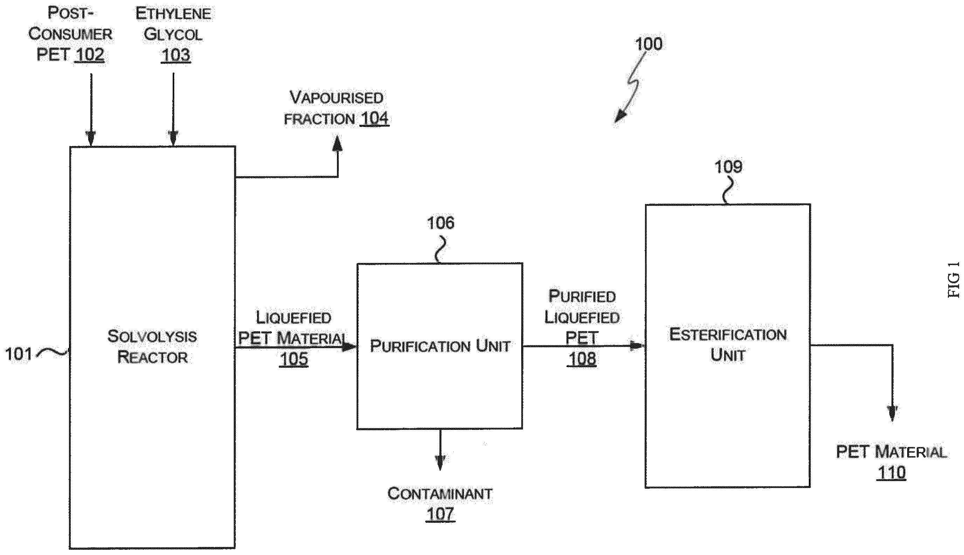

Turning to FIG. 1, an exemplary system 100 for implementing aspects of the present invention is provided. Recycled post-consumer PET material 102 is added to solvolysis reactor 101 with an amount of ethylene glycol 103 suitable to partially depolymerise the post-consumer PET material 102. In aspects, the solvolysis reactor 101 comprises one or more of: a mixer, a temperature sensor, a vapour condenser, a pressure sensor, at least one heating element. The mixture of post-consumer PET material 102 and ethylene glycol 103 is heated to between 100°C and 300°C, such that the post-consumer PET material 102 liquefies. Upon heating of the mixture, a fraction of the mixture may vaporise; this fraction can be condensed using the optional vapour condenser, and the vaporised fraction 104 is optionally removed from the solvolysis reactor 101.

The liquefied PET material 105 is passed from the solvolysis reactor 101 to a purification unit 106. In aspects, the purification unit 106 comprises at least one of: a filter, a centrifuge, distillation means, means for physical pre-treatment by heating, means for solid centrifugal sedimentation, means for field assisted separation, means for depth filtering, means for filtrate decolourisation with adsorption. At least one contaminant 107 is removed from the liquefied PET material 105.

The purified liquefied PET material 108 is passed from the purification unit 106 to an esterification unit 109. The esterification unit 109 comprises one or more of: a mixer, a temperature sensor, at least one heating element, means for removing water (optionally a vapor condenser). The purified liquefied PET material 108 is repolymerised within esterification unit 109 to produce polymeric PET material 110, which comprises recycled PET oligomers derived from post-consumer PET material 102.

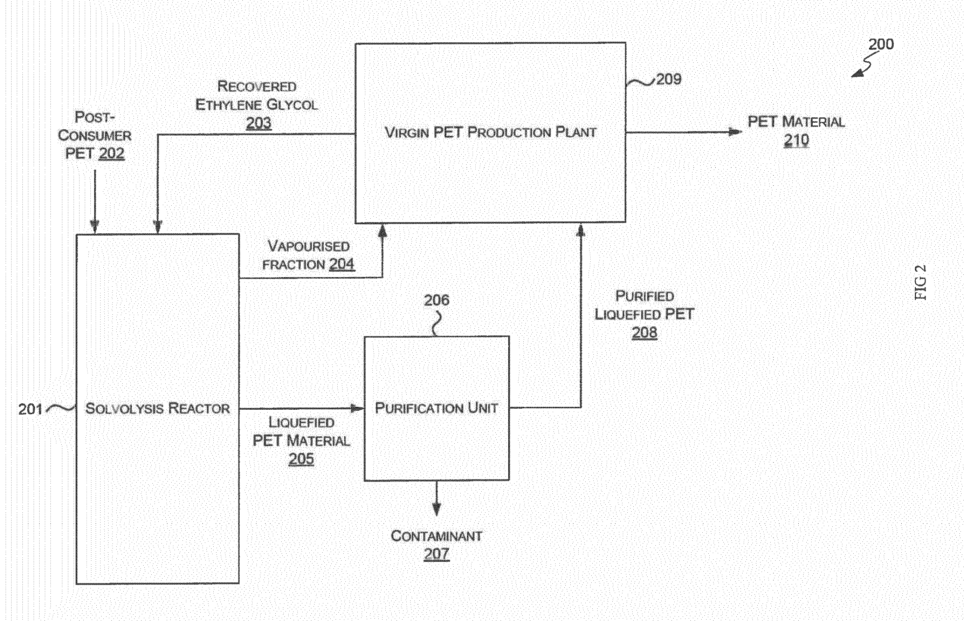

Turning to FIG. 2, an exemplary system 200 is provided for implementing aspects of the present invention relating to integration of the provided PET recycling process with a virgin PET production plant.

Post-consumer PET material 202 is added to solvolysis reactor 201 with an amount of recovered ethylene glycol 203 suitable to partially depolymerise the post-consumer PET material 202. Recovered ethylene glycol 203 is suitably derived from virgin PET production plant 209. In aspects, the solvolysis reactor 201 comprises one or more of: a mixer, a temperature sensor, a vapour condenser, a pressure sensor, at least one heating element. The mixture of post-consumer PET material 202 and recovered ethylene glycol 203 is heated to between 100°C and 300°C, such that the post-consumer PET material 202 liquefies. Upon heating of the mixture, a fraction of the mixture may vaporise; this fraction can be condensed using the optional vapour condenser, and the vaporised fraction 204 is optionally removed from the solvolysis reactor 201.

The liquefied PET material 205 is passed from the solvolysis reactor 201 to a purification unit 206. In aspects, the purification unit 206 comprises at least one of: a filter, a centrifuge, distillation means, means for physical pre-treatment by heating, means for solid centrifugal sedimentation, means for field assisted separation, means for depth filtering, means for filtrate decolourisation with adsorption. At least one contaminant 207 is removed from the liquefied PET material 205.

The purified liquefied PET material 208 is passed from the purification unit 206 to virgin PET production plant 209, where it is mixed with virgin liquid material. The blend of purified liquefied PET material 208 and virgin liquid material is polymerised to produce polymeric PET material 210 comprising virgin PET monomers and recycled PET oligomers.

### EXAMPLES

The following examples are non-limiting and are provided to illustrate how the invention may be practiced.

### Example 1

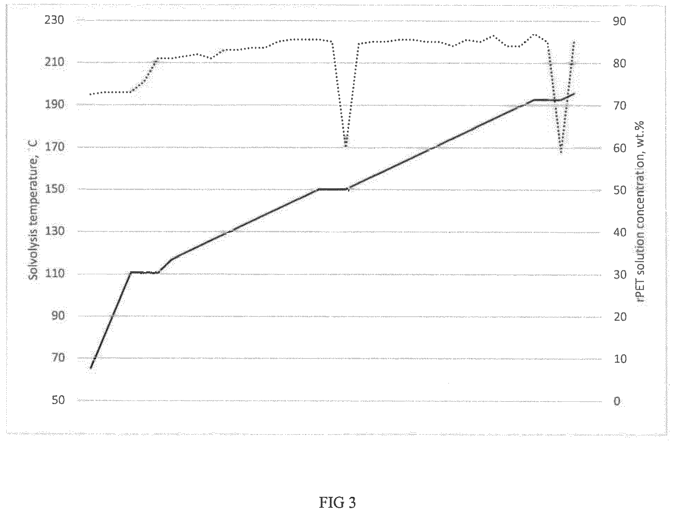

Commercially available post-consumer PET resin in a form of flakes was liquefied with recovered ethylene glycol, recovered from a PET production process, in a 2 L volume glass reactor vessel equipped with a mixer, temperature sensor and vapor condenser. The purity of the recovered ethylene glycol was determined. The recovered ethylene glycol contained 0.9 wt.% water and 0.6 wt.% of diethylene glycol. The post-consumer PET concentration in solution was gradually increased from 0 to 73 wt.%, as shown in FIG. 3. The resulting solution was transparent and remained in a liquid state at temperatures exceeding 160°C.

The solution was passed through a vacuum filtration unit at 180-190°C with a 5 µm pore size filter. The purified solution was stored overnight at room temperature to allow complete solidification. Using differential scanning calorimetry, the melting point was determined to be 220±5°C. Using a glass capillary viscometer, the intrinsic viscosity was determined to be 0.06 dL/g.

### Example 2

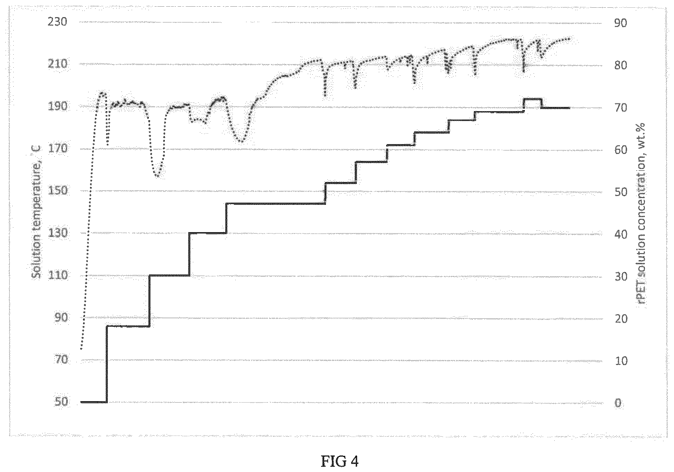

Commercially available post-consumer PET resin in a form of flakes was liquefied with recovered ethylene glycol, recovered from a PET production process, in a stainless steel 5 m³ reactor, equipped with a mixer, a visual inspection manhole, a temperature sensor, a vapor condenser, and solid/liquid raw materials dosing units. The purity of the recovered ethylene glycol was determined. The recovered ethylene glycol contained 0.9 wt.% water and 0.6 wt.% of diethylene glycol. The post-consumer PET concentration in solution was gradually increased from 0 to 73 wt.%, then 100 kg and 130 kg of post-consumer PET flakes and recovered ethylene glycol respectively was introduced to the reactor solution to form a 70 wt.% post-consumer PET solution, shown in FIG. 4. The resulting solution was transparent and remained in a liquid state at temperatures exceeding 180°C.

The solution was passed through a filtration unit at 180-190°C with 2000 µm and 25 µm pore size filters. The solution samples demonstrated a melting point of 220±5°C and intrinsic viscosity of 0.06 dL/g. Solid particles, recovered from the liquefied PET stream in the filtration unit, were non-PET material in concentrations up to 200 ppm.

## Claims

1. A process for recycling post-consumer polyethylene terephthalate (PET) comprising:
i) combining a post-consumer PET material with an amount of ethylene glycol suitable to partially depolymerise the post-consumer PET material to produce PET oligomers comprising no more than 100 repeating PET monomeric units, wherein the ratio of PET to ethylene glycol is between 5:95 to 95:5 by weight, and wherein the ethylene glycol is recovered ethylene glycol that has been recovered from a virgin PET production process;
ii) heating the mixture of post-consumer PET material and ethylene glycol to between 180°C and 300°C, wherein upon heating the post-consumer PET material liquefies;
iii) purifying the liquefied PET material, wherein said liquefied PET material comprises partially depolymerised PET and ethylene glycol, and wherein said purification comprises removal of at least one contaminant, wherein a contaminant is any component other than the partially depolymerised PET and ethylene glycol, wherein said purification is performed at 100°C - 250°C and 0.1MPa - 2MPa absolute pressure, and wherein the purified liquefied PET material has an intrinsic viscosity of between 0.05 dL/g and 0.5 dL/g;
iv) re-polymerising the purified liquefied PET to produce a polymeric PET material comprising recycled PET oligomers.

2. The process according to claim 1, wherein the step of re-polymerising comprises mixing the purified liquefied PET material into a virgin PET liquid polycondensation stage comprising virgin liquid material, said virgin liquid material comprising terephthalic acid and ethylene glycol.

3. The process according to claim 2, wherein the blend of purified liquefied PET material and virgin liquid material comprises no more than 90% purified liquefied PET material by weight, optionally between 10% and 30% purified liquified PET material by weight.

4. The process according to any preceding claim, wherein the purified liquefied PET material has an intrinsic viscosity of 0.06 dL/g.

5. The process according to any preceding claim, wherein the recovered ethylene glycol is added to the post-consumer PET material at a temperature no lower than 180°C, optionally no lower than 200°C.

6. The process according to any preceding claim, wherein, before the post-consumer PET and recovered ethylene glycol are combined, the recovered ethylene glycol is analysed to determine the purity of said recovered ethylene glycol, and wherein the volume of recovered ethylene glycol combined with the post-consumer PET is determined according to said purity.

7. The process according to any preceding claim, wherein the mixture of post-consumer PET and ethylene glycol is heated to between 180°C and 265°C, optionally between 230° and 250°.

8. The process according to any preceding claim, wherein the mixture of post-consumer PET and ethylene glycol is heated at an absolute pressure of between 0.1 and 3 MPa, and wherein upon heating the absolute pressure is greater than 0.1 MPa, optionally greater than 0.2 MPa.

9. The process according to any preceding claim, wherein the post-consumer PET material in the form of flakes or pellets prior to liquefying.

10. The process according to any preceding claim, wherein upon heating of the mixture of post-consumer PET and ethylene glycol a fraction of the mixture vaporises, said vaporised fraction comprising no more than 10% of the ethylene glycol present in the mixture, and wherein the process additionally comprises removing said vaporised fraction via condensing means.

11. The process according to claim 10, wherein the vaporised fraction further comprises water and contaminants having a boiling point below 300°C.

12. The process according to any preceding claim, wherein re-polymerisation of the purified liquefied PET comprises increasing the viscosity of the PET material such that a polymeric PET material is produced which is a solid at temperatures below 150°C at 0.1 MPa.

## Patentansprüche

1. Verfahren zum Recyceln von Post-Consumer-Polyethylenterephthalat (PET), umfassend:
i) Kombinieren eines Post-Consumer-PET-Materials mit einer Menge an Ethylenglykol, die geeignet ist, das Post-Consumer-PET-Material teilweise zu depolymerisieren, um PET-Oligomere herzustellen, die nicht mehr als 100 sich wiederholende PET-Monomereinheiten umfassen, wobei das Gewichtsverhältnis von PET zu Ethylenglykol zwischen 5:95 und 95:5 liegt und wobei das Ethylenglykol wiedergewonnenes Ethylenglykol ist, das aus einem PET-Neuwaren-Herstellungsverfahren wiedergewonnen wurde;
ii) Erhitzen der Mischung aus Post-Consumer-PET-Material und Ethylenglykol auf 180 °C bis 300 °C, wobei sich das Post-Consumer-PET-Material beim Erhitzen verflüssigt;
iii) Reinigen des verflüssigten PET-Materials, wobei das verflüssigte PET-Material teilweise depolymerisiertes PET und Ethylenglykol umfasst, und wobei die Reinigung das Entfernen von mindestens einer Verunreinigung umfasst, wobei eine Verunreinigung eine beliebige Komponente ist, die nicht das teilweise depolymerisierte PET und Ethylenglykol ist, wobei die Reinigung bei 100 °C - 250 °C und 0,1 MPa - 2 MPa absolutem Druck durchgeführt wird, und wobei das gereinigte verflüssigte PET-Material eine intrinsische Viskosität zwischen 0,05 dL/g und 0,5 dL/g aufweist;
iv) Repolymerisation des gereinigten, verflüssigten PET zur Herstellung eines polymeren PET-Materials, das recycelte PET-Oligomere umfasst.

2. Verfahren nach Anspruch 1, wobei der Schritt des Repolymerisierens das Mischen des gereinigten verflüssigten PET-Materials in eine neue flüssige PET-Polykondensationsstufe umfasst, die neues flüssiges Material umfasst, wobei das neue flüssige Material Terephthalsäure und Ethylenglykol umfasst.

3. Verfahren nach Anspruch 2, wobei das Gemisch aus gereinigtem verflüssigtem PET-Material und neuem flüssigen Material nicht mehr als 90 Gew.-% gereinigtes verflüssigtes PET-Material, gegebenenfalls zwischen 10 und 30 Gew.-% gereinigtes verflüssigtes PET-Material, umfasst.

4. Verfahren nach einem vorstehenden Anspruch, wobei das gereinigte verflüssigte PET-Material eine intrinsische Viskosität von 0,06 dL/g aufweist.

5. Verfahren nach einem vorstehenden Anspruch, wobei das zurückgewonnene Ethylenglykol dem Post-Consumer-PET-Material bei einer Temperatur von nicht weniger als 180 °C, gegebenenfalls nicht weniger als 200 °C, zugesetzt wird.

6. Verfahren nach einem vorstehenden Anspruch, wobei vor der Zusammenführung von Post-Consumer-PET und zurückgewonnenem Ethylenglykol das zurückgewonnene Ethylenglykol analysiert wird, um die Reinheit des zurückgewonnenen Ethylenglykols zu bestimmen, und wobei das Volumen des zurückgewonnenen Ethylenglykols, das mit dem Post-Consumer-PET zusammengeführt wird, in Abhängigkeit von der Reinheit bestimmt wird.

7. Verfahren nach einem vorstehenden Anspruch, wobei die Mischung aus Post-Consumer-PET und Ethylenglykol auf eine Temperatur zwischen 180 °C und 265 °C, optional zwischen 230 °C und 250 °C, erhitzt wird.

8. Verfahren nach einem vorstehenden Anspruch, wobei das Gemisch aus Post-Consumer-PET und Ethylenglykol bei einem absoluten Druck zwischen 0,1 und 3 MPa erhitzt wird und wobei beim Erhitzen der absolute Druck größer als 0,1 MPa, optional größer als 0,2 MPa ist.

9. Verfahren nach einem vorstehenden Anspruch, wobei das Post-Consumer-PET-Material vor der Verflüssigung in Form von Flocken oder Granulat vorliegt.

10. Verfahren nach einem vorstehenden Anspruch, wobei beim Erhitzen der Mischung aus Post-Consumer-PET und Ethylenglykol eine Fraktion der Mischung verdampft, wobei die verdampfte Fraktion nicht mehr als 10 % des in der Mischung vorhandenen Ethylenglykols umfasst, und wobei das Verfahren zusätzlich das Entfernen der verdampften Fraktion über Kondensationsmittel umfasst.

11. Verfahren nach Anspruch 10, wobei der verdampfte Bruchteil weiter Wasser und Verunreinigungen mit einem Siedepunkt unter 300°C umfasst.

12. Verfahren nach einem vorstehenden Anspruch, wobei die Repolymerisation des gereinigten verflüssigten PET die Erhöhung der Viskosität des PET-Materials umfasst, sodass ein polymeres PET-Material hergestellt wird, das bei Temperaturen unter 150 °C bei 0,1 MPa fest ist.

## Revendications

1. Procédé de recyclage de polytéréphtalate d'éthylène (PET) post-consommation comprenant :
i) la combinaison d'un matériau en PET post-consommation avec une quantité d'éthylène glycol appropriée pour dépolymériser partiellement le matériau en PET post-consommation pour produire des oligomères de PET ne comprenant pas plus de 100 motifs monomères répétitifs de PET, dans lequel le rapport PET/éthylène glycol est entre 5:95 et 95:5 en poids, et dans lequel l'éthylène glycol est de l'éthylène glycol récupéré qui a été récupéré à partir d'un procédé de production de PET vierge ;
ii) le chauffage du mélange de matériau en PET post-consommation et d'éthylène glycol entre 180 °C et 300 °C, dans lequel, lors du chauffage, le matériau en PET post-consommation se liquéfie ;
iii) la purification du matériau en PET liquéfié, dans lequel ledit matériau en PET liquéfié comprend un PET partiellement dépolymérisé et de l'éthylène glycol, et dans lequel ladite purification comprend l'élimination d'au moins un contaminant, dans lequel un contaminant est n'importe quel composant autre que le PET partiellement dépolymérisé et l'éthylène glycol, dans lequel ladite purification est effectuée à 100 °C - 250 °C et à une pression absolue de 0,1 MPa -2 MPa, et dans lequel le matériau en PET liquéfié et purifié présente une viscosité intrinsèque entre 0,05 dl/g et 0,5 dl/g ;
iv) la repolymérisation du PET liquéfié et purifié pour produire un matériau en PET polymère comprenant des oligomères de PET recyclés.

2. Procédé selon la revendication 1, dans lequel l'étape de repolymérisation comprend le mélange du matériau en PET liquéfié et purifié dans un étage de polycondensation en phase liquide de PET vierge comprenant un matériau liquide vierge, ledit matériau liquide vierge comprenant de l'acide téréphtalique et de l'éthylène glycol.

3. Procédé selon la revendication 2, dans lequel le mélange de matériau en PET liquéfié et purifié et de matériau liquide vierge ne comprend pas plus de 90 % en poids de matériau en PET liquéfié et purifié, facultativement entre 10 % et 30 % en poids de matériau en PET liquéfié et purifié.

4. Procédé selon une quelconque revendication précédente, dans lequel le matériau en PET liquéfié et purifié présente une viscosité intrinsèque de 0,06 dl/g.

5. Procédé selon une quelconque revendication précédente, dans lequel l'éthylène glycol récupéré est ajouté au matériau en PET post-consommation à une température non inférieure à 180 °C, facultativement non inférieure à 200 °C.

6. Procédé selon une quelconque revendication précédente, dans lequel, avant que le PET post-consommation et l'éthylène glycol récupéré ne soient combinés, l'éthylène glycol récupéré est analysé pour déterminer la pureté dudit éthylène glycol récupéré, et dans lequel le volume d'éthylène glycol récupéré combiné avec le PET post-consommation est déterminé en fonction de ladite pureté.

7. Procédé selon une quelconque revendication précédente, dans lequel le mélange de PET post-consommation et d'éthylène glycol est chauffé entre 180 °C et 265 °C, facultativement entre 230° et 250°.

8. Procédé selon une quelconque revendication précédente, dans lequel le mélange de PET post-consommation et d'éthylène glycol est chauffé à une pression absolue entre 0,1 et 3 MPa, et dans lequel, lors du chauffage, la pression absolue est supérieure à 0,1 MPa, facultativement supérieure à 0,2 MPa.

9. Procédé selon une quelconque revendication précédente, dans lequel le matériau en PET post-consommation est sous la forme de paillettes ou de pastilles avant la liquéfaction.

10. Procédé selon une quelconque revendication précédente, dans lequel, lors du chauffage du mélange de PET post-consommation et d'éthylène glycol, une fraction du mélange se vaporise, ladite fraction vaporisée ne comprenant pas plus de 10 % de l'éthylène glycol présent dans le mélange, et dans lequel le procédé comprend en outre l'élimination de ladite fraction vaporisée via un moyen de condensation.

11. Procédé selon la revendication 10, dans lequel la fraction vaporisée comprend en outre de l'eau et des contaminants présentant un point d'ébullition inférieur à 300 °C.

12. Procédé selon une quelconque revendication précédente, dans lequel la repolymérisation du PET liquéfié et purifié comprend l'augmentation de la viscosité du matériau en PET pour qu'un matériau en PET polymère produit soit solide à des températures inférieures à 150 °C à 0,1 MPa.
